Europäisches Patentamt

European Patent Office

Office européen des brevets

(19)

11 Veröffentlichungsnummer : **0 019 609**
**B1**

(12) **EUROPÄISCHE PATENTSCHRIFT**

(45) Veröffentlichungstag der Patentschrift :
26.01.83

(21) Anmeldenummer : 80890050.0

(22) Anmeldetag : 05.05.80

(51) Int. Cl.³ : **F 16 H   3/08, F 16 D 25/063 //
(B60K17/08, B23Q5/14)**

(54) **Lastschaltgetriebe.**

(30) Priorität : **09.05.79 AT 3462/79**

(43) Veröffentlichungstag der Anmeldung :
**26.11.80 Patentblatt 80/24**

(45) Bekanntmachung des Hinweises auf die Patenterteilung : **26.01.83 Patentblatt 83/04**

(84) Benannte Vertragsstaaten :
**BE CH DE FR GB IT LI LU NL SE**

(56) Entgegenhaltungen :
**AT B 270 325**
**CH A 420 766**
**DE B 1 127 164**
**DE C 10 596**
**DE C 710 333**
**FR A 925 410**
**FR A 927 421**
**GB A 1 000 969**
**US A 3 166 167**

(73) Patentinhaber : **EVG Entwicklungs- u. Verwertungs-
Gesellschaft m.b.H.
Vinzenz-Muchitsch-Strasse 36
A-8011 Graz (AT)**

(72) Erfinder : **Gött, Hans, Dipl.-Ing.
Petersbergenstrasse 69
A-8011 Graz (AT)**
Erfinder : **Ritter, Josef, Dr. Dipl.-Ing.
Stenggstrasse 33
A-8011 Graz (AT)**
Erfinder : **Ritter, Gerhard, Dr. Dipl.-Ing.
Unterer Plattenweg 47
A-8011 Graz (AT)**
Erfinder : **Ritter, Klaus, Dipl.-Ing.
Peterstalstrasse 157
A-8011 Graz (AT)**

(74) Vertreter : **Schütz, Alfred, Dipl.-Ing. Dr. techn.
Dipl.-Ing. Dr. techn. Alfred Schütz Dipl.-Ing. Dr. techn.
Rudolf Pfeifer et al
Dr. phil. Engelbert Mrazek Dipl.-Ing. Walter Holzer
Dipl.-Ing. Otto Pfeifer Fleischmanngasse 9
A-1040 Wien (AT)**

## Lastschaltgetriebe

Die Erfindung bezieht sich auf ein Lastschaltgetriebe mit einer Eingangs- und einer Ausgangswelle, die je zwei Zahnräder mit unterschiedlicher Zähnezahl tragen, und einem Vorgelege mit durch Kupplungen alternativ in den Kraftübertragungsweg zwischen Eingangs- und Ausgangswelle einschaltbaren Zahnrädern. Ein derartiges Getriebe ist. z.B. aus der FR-A 925.410 bekannt.

Bekannte Lastschaltgetriebe, beispielsweise die automatischen Getriebe von Kraftfahrzeugen, bestehen aus einer Kombination einer hydrodynamischen Kupplung mit einem oder mehreren Planetenradgetrieben, wobei zur Auswahl des gewünschten Übersetzungsverhältnisses bzw. zur Auswahl der gewünschten Antriebsrichtung (Vorwärts- oder Rückwärtsgang) ein System von Kupplungen und Bremsen vorgesehen ist, mit dessen Hilfe sowohl die Eingangswelle als auch die Ausgangswelle wahlweise mit dem Sonnenrad, dem Steg oder dem Kronenrad des Planetengetriebes verbunden werden kann.

Die Erfindung zielt darauf ab, ein Lastschaltgetriebe zu schaffen, das wesentlich einfacheren Aufbau hat als die bekannten Planetenrad-Lastschaltgetriebe und weder eine hydrodynamische Kupplung noch eigene Bremsen zum Stillsetzen einzelner Getriebeelemente für die Schaltvorgänge erfordert. Bei einem gemäß der Erfindung ausgebildeten Lastschaltgetriebe der einleitend angegebenen Art wird dieses Ziel dadurch erreicht, daß das Vorgelege zwei Paare von Koaxialen Wellen aufweist, die axial aufeinander eingefluchtet sind und an den einander zugekehrten Enden je eine Kupplungsscheibe mit einwärts vorspringenden wirksamen Kupplungsflächen und näher ihrer anderen Enden je ein Zahnrad tragen, das in dauerndem Eingriff mit einem zugeordneten Zahnrad der Eingangs- bzw. Ausgangswelle steht, daß zwischen den einander zugekehrten Enden der inneren koaxialen Wellen und axial gegen diese frei verschiebbar eine zentrale Kupplungsscheibe gelagert ist, daß zwei homologe Wellen der beiden Wellenpaare voneinander unabhängig axial aus einer durch Federn gesicherten Ruhelage einwärts verschiebbar, die anderen beiden Wellen hingegen axial unverschieblich gelagert sind und daß in der Ruhelage aller Wellen die wirksamen Kupplungsflächen der beiden Kupplungsscheiben an den axial unverschieblich gelagerten Wellen näher der zentralen Kupplungsscheibe liegen als die wirksamen Kupplungsflächen der anderen beiden Kupplungsscheiben.

Bei einem bevorzugten Ausführungsbeispiel sind die axial verschieblichen Wellen des Vorgeleges durch Federn in eine der Leerlaufstellung des Getriebes entsprechende Ruhestellung vorgespannt und mit Hilfe von Druckmittelzylindern in Richtung zur zentralen Kupplungsscheibe verschiebbar.

Ein solches Getriebe weist nur einfache Zahnräder auf und kann durch einfache hydraulische Schaltmittel unter Last geschaltet werden. Durch Serienschaltung von zwei oder mehr Getriebeeinheiten kann eine große Anzahl von Gängen, die auch mehrere Rückwärtsgänge umfassen können, realisiert werden.

Die Erfindung wird nachfolgend an zwei Ausführungsbeispielen unter Bezugnahme auf die Zeichnungen genauer erläutert. Es zeigt

Figur 1 im Achsschnitt ein Ausführungsbeispiel, bei dem die innenliegenden der koaxialen Wellen des Vorgeleges axial verschiebbar und die außenliegenden Wellen axial unverschieblich sind, und

Figur 2 ein Ausführungsbeispiel, bei dem bezüglich der koaxialen Wellen des Vorgeleges die umgekehrten Verhältnisse vorliegen.

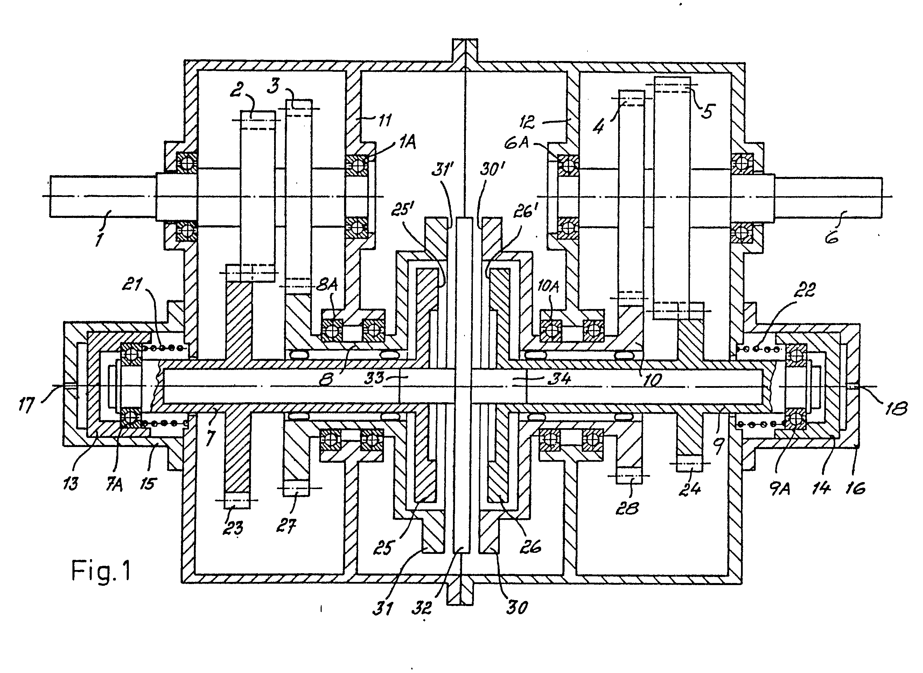

Gemäß Fig. 1 sind auf einer mit einem nicht dargestellten Antriebsmotor in dauerndem Eingriff stehenden Eingangswelle 1 drehfest und unverschieblich zwei Zahnräder 2 und 3 angeordnet. In gleicher Weise sind zwei Zahnräder 4, 5 aud einer Ausgangswelle 6 angeordnet, die in dauernder Wirkverbindung mit der Last, etwa mit einer anzutreibenden Fahrzeugachse oder mit der Antriebswelle einer Werkzeugmaschine, steht.

Zwei Paare von koaxialen Hohlwellen 7, 8 und 9, 10 bilden alternativ kuppelbare Abschnitte einer Vorgelegewelle. Die Hohlwellen 7 und 9 sind bezüglich der im Getriebegehäuse unverschieblich gelagerten Hohlwellen 8 und 10 längsverschieblich gelagert. Die äußeren Enden der inneren Hohlwellen 7 und 9 ruhen in Kugellagern 7A, 9A, welche in die Innenbohrung zylindrischer Kolben 13, 14 eingepaßt sind. Die Kolben sind gleitfähig in Zylindern 15, 16 geführt und können durch Öffnungen 17, 18 in den Zylinderdeckeln mit Druckmittel beaufschlagt werden. Schraubendedern 21, 22 halten die Kolben 13, 14, solange keiner von ihnen mit Druckmittel beaufschlagt wird, und mit ihnen die Hohlwellen 7 und 9 in ihrer Ruhestellung, die gleichzeitig auch die Leerlaufstellung des Getriebes ist.

Die äußeren Hohlwellen 8 und 10 sind unverschieblich mittels Kugellagern 8A, 10A in Zwischenwänden 11, 12 des Getriebegehäuses gelagert, in welchen auch die Enden der Eingangs- und der Ausgangswelle 1 bzw. 6 abstützende Kugellager 1a bzw. 6a vorgesehen sind.

Mit der Hohlwelle 7 ist drehfest und unverschieblich ein Zahnrad 23 verbunden, das mit dem Zahnrad 2, gegenüber welchem es längsverschieblich ist, in dauerndem Eingriff steht. Analog ist mit der Hohlwelle 9 drehfest und unverschieblich ein Zahnrad 24 verbunden, das in dauerndem Eingriff mit dem Zahnrad 5 steht, gegenüber welchem es längsverschieblich ist.

An ihrem dem Kolben 13 gegenüberliegenden inneren Ende trägt die Hohlwelle 7 eine mit ihr drehfest und unverschieblich verbundene Kupplungsscheibe 25, und analog trägt die Welle 9 an ihrem inneren Ende eine Kupplungsscheibe 26.

Die Hohlwellen 8 und 10 tragen jeweils an ihrem äußeren Ende ein Zahnrad 27 bzw. 28, wobei das Zahnrad 27 dauernd mit dem Zahnrad 3 und das Zahnrad 28 dauernd mit dem Zahnrad 4 in Eingriff steht. Am inneren Ende tragen die Hohlwellen 8 und 10 je eine Kupplungsscheibe 30 bzw. 31, welche die Kupplungsscheibe 25 bzw. 26 am inneren Ende der Hohlwelle 7 bzw. 8 in der Leerlaufstellung des Getriebes übergreift.

Zwischen den Kupplungsscheiben 25, 31 einerseits und den Kupplungsscheiben 26, 30 anderseits ist eine zentrale Kupplungsscheibe 32 angeordnet, die mittels zweier Achsstummel 33 und 34 schwimmend in den Hohlwellen 7 und 9 gelagert ist.

Es ist für die Erfindung wesentlich, daß die Kupplungsscheiben 25, 26, 30 und 31 so ausgebildet sind, daß die beim Kupplungsvorgang wirksamen Stirnflächen 25', 31' und 26', 30' in unterschiedlichen Ebenen liegen. Beim Ausführungsbeispiel nach Fig. 1 ist der Abstand zwischen den Stirnflächen der Kupplungsscheiben 25 und 26 im Ruhezustand dieser Kupplungsscheiben größer als jener zwischen den Stirnflächen der Kupplungsscheiben 30 und 31.

Die Wirkungsweise des beschriebenen Getriebes ist nun folgende: Werden die beiden Kolben 13, 14 durch die Druckmittelöffnungen 17, 18 gleichzeitig mit Druckmittel beaufschlagt, dann werden sie gegen den Druck der Schraubenfedern 21, 22 gegeneinander bewegt. Dadurch werden aber auch die Hohlwellen 7 und 9 soweit gegeneinander bewegt, daß sich ihre Kupplungsscheiben 25, 26 von entgegengesetzten Seiten her an die zentrale Kupplungsscheibe 32 anlegen.

Der Kraftfluß ist bei diesem niedrigsten Gang folgender : Eingangswelle 1 — Zahnrad 2 — Zahnrad 23 — Welle 7 — Kupplungsscheibe 25 — Kupplungsscheibe 32 — Kupplungsscheibe 26 — Welle 9 — Zahnrad 24 — Zahnrad 5 — Ausgangswelle 6.

Soll der nächsthöhere Gang eingeschaltet werden, so wird der Druck im Zylinder 16 aufgehoben. Die Schraubenfeder 22 dehnt sich dann aus und stellt dabei den Kolben 14 und mit diesem die Welle 9 und die Kupplungsscheibe 26 wieder in ihre Ausgangslage zurück.

Da der Kolben 13 jedoch weiterhin unter Druck steht, drückt er, zumal die zentrale Kupplungsscheibe 32 nun keinen Gegendruck mehr bewirkt, die Schraubenfeder 21 noch mehr zusammen und schiebt die Welle 7 und die Kupplungsscheiben 25 und 32 weiter nach rechts. Bei dieser Bewegung nimmt die Kupplungsscheibe 25 die schwimmend gelagerte zentrale Kupplungsscheibe 32 soweit mit, daß diese an der Kupplungsscheibe 30 zur Anlage kommt.

Nun ist folgender Kraftübertragungsweg hergestellt : Eingangswelle 1 — Zahnrad 2 — Zahnrad 23 — Welle 7 — Kupplungsscheibe 25 — Kupplungsscheibe 32 — Kupplungsscheibe 30 — Welle 10 — Zahnrad 28 — Zahnrad 4 — Ausgangswelle 6.

Wird schließlich der Druck im Zylinder 15 aufgehoben und gleichzeitig der Kolben 14 im Zylinder 16 über die Druckmittelöffnung 18 mit Druckmittel beaufschlagt, dann bewegt die Schraubenfeder 21 den Kolben 13 und alle mit diesem verbundenen Teile in die Ruhelage zurück. Gleichzeitig drückt der Kolben 14 die Schraubenfeder 22 zusammen und bewegt alle mit ihm verbundenen Teile nach links. Bei dieser Bewegung stößt die Kupplungsscheibe 26 zunächst gegen die zentrale Kupplungsscheibe 32 und nimmt diese bei ihrer Bewegung mit, wobei die Kupplungsscheibe 32 an der Kupplungsscheibe 31 zur Anlage kommt.

Nun ist folgender Kraftübertragungsweg hergestellt : Eingangswelle 1 — Zahnrad 3 — Zahnrad 27 — Welle 8 — Kupplungsscheibe 31 — Kupplungsscheibe 32 — Kupplungsscheibe 26 — Welle 9 — Zahnrad 24 — Zahnrad 5 — Ausgangswelle 6.

Werden beide Zylinder 15 und 16 gleichzeitig vom Flüssigkeitsdruck entlastet, dann kehren alle Teile unter der Wirkung der Schraubenfedern 21, 22 in die in Fig. 1 gezeigte Ruhestellung zurück, die gleichzeitig die Leerlaufstellung des Getriebes ist.

Zusammenfassend ergibt sich, daß die Kupplung bei Druckentlastung beider Zylinder 15, 16 die Leerlaufstellung einnimmt, bei Druckbeaufschlagung beider Zylinder 15, 16 mit der größten Untersetzung, also dem niedrigsten, z.B. 1. Gang, bei Druckbeaufschlagung nur des Zylinders 15 mit der zweitgrößten Untersetzung, entsprechend dem 2. Gang, und bei Druckbeaufschlagung nur des Zylinders 16 mit der kleinsten Untersetzung, entsprechend dem 3. Gang arbeitet.

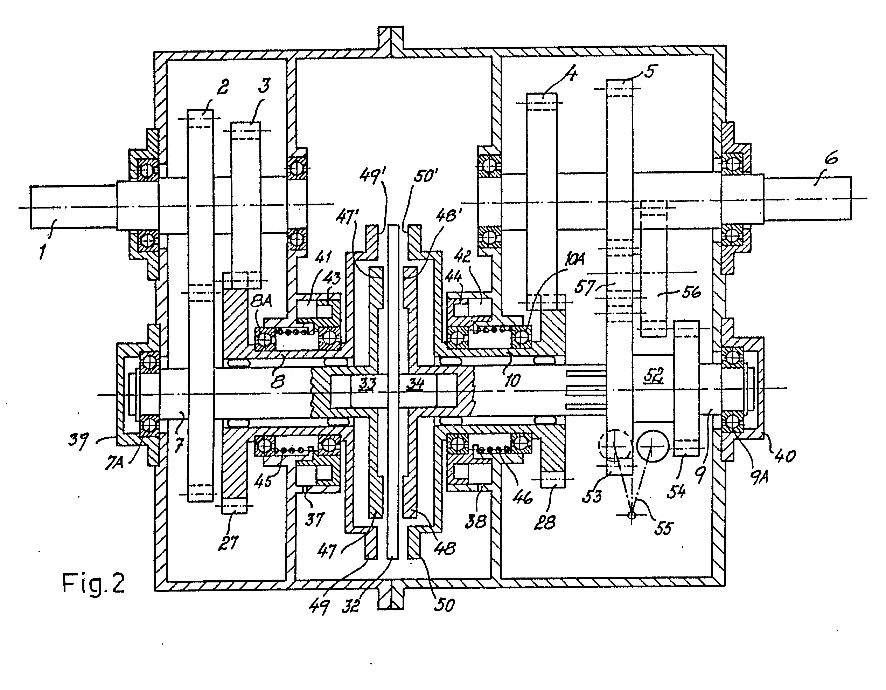

Das beschriebene erfindungsgemäße Getriebe läßt verschiedene konstruktive Abwandlungen zu. Beispielsweise sind bei der Ausführungsform nach Fig. 2 die inneren Hohlwellen 7 und 9 unverschieblich in Lagerbüchsen 39, 40 gelagert, wogegen die äußeren Hohlwellen 8 und 10 gegenüber den Hohlwellen 7 und 9 längsverschieblich sind.

Nahe dem inneren Ende der Hohlwellen 8 und 10 ist je eine Ringkammer 41, 42 vorgesehen, deren den Kupplungsscheiben zugekehrte Stirnwand als Kolben 43, 44 ausgebildet ist. Die Druckmittelzuführung zu den Ringkammern 41, 42 erfolgt über Öffnungen 37, 38. Schraubenfedern 45, 46 halten die Wellen 8 und 10, wenn die Kolben 43, 44 nicht mit Druckmittel beaufschlagt sind, in ihrer Ruhestellung, welche der Leerlaufstellung des Getriebes entspricht.

Bei dieser Ausbildung des Getriebes sind die Zahnräder 27 und 28 gegenüber den Zahnrädern 3 und 4 verschieblich, sie stehen jedoch. gleichfalls in jeder möglichen Verschiebungsstellung mit den Zahnrädern 3 und 4 in dauerndem Eingriff.

Die Wellen 7 und 9 tragen an ihren einander zugekehrten inneren Enden Kupplungsscheiben 47 bzw. 48, und analog tragen die Wellen 8 und 10 an den einander zugekehrten inneren Enden Kupplungsscheiben 49 bzw. 50. Zwischen diesen Kupplungsscheiben ist wieder eine schwimmend gelagerte zentrale Kupplungsscheibe 32 angeordnet, deren Achsstummel 33, 34 in den Bohrungen der Wellen 7 und 9 gelagert sind.

Zum Unterschied von der Ausbildung des Getriebes nach Fig. 1 sind bei der Ausführungsform nach Fig. 2 im Leerlaufzustand die Abstände der Stirnflächen 47', 48' der Kupplungsscheiben 47, 48 an den inneren Hohlwellen 7, 9 voneinander geringer als die Abstände der Stirnflächen 49', 50' der Kupplungsscheiben 49 und 50 an den äußeren Hohlwellen, um mittelbare Schaltverbindungen zwischen den Scheiben 49 und 48 bzw. zwischen den Scheiben 47 und 50 herstellen zu können.

Für die Ausbildung des Getriebes gilt also die allgemeine Regel, daß im Leerlaufzustand des Getriebes die Summe der Abstände der wirksamen Kupplungsflächen der in Achsrichtung der Vorgelegewelle verschiebbaren Kupplungsscheiben von den ihnen zugeordneten Kupplungsflächen der schwimmend gelagerten Kupplungsscheibe größer sein muß als die Summen der Abstände der wirksamen Kupplungsflächen der in Achsrichtung der Vorgelegewelle unverschieblichen Kupplungsscheiben von den ihnen zugeordneten Kupplungsflächen der schwimmend gelagerten zentralen Kupplungsscheibe. Die Feststellung, daß es sich dabei um Summen der Abstände handelt, ist deshalb wesentlich, weil diese Feststellung für jede beliebige Stellung der schwimmend gelagerten zentralen Kupplungsscheibe 32 Geltung hat, auch dann, wenn nach Zurückschalten in den Leerlaufzustand diese Kupplungsscheibe zufolge eines vorangegangenen Schaltvorganges in Anlage an einer der Kupplungsscheiben 47, 48 stehen bleibt. Die angegebene Regel gilt überdies völlig allgemein, auch dann, wenn, was im Rahmen der Erfindung durchaus denkbar ist, an Stelle von einfachen Scheibenkupplungen konische Kupplungskörper für die Übertragung größerer Kräfte vorgesehen werden.

Um schließlich, falls dies erwünscht sein sollte, auch einen beliebigen Wechsel der Antriebsrichtung vorsehen zu können, ist eine längs der Welle 9 verschiebliche und drehfest mit dieser Welle 9 verbundene Hohlwelle 52 vorgesehen, welche an ihren Enden je ein Zahnrad 53, 54 trägt. Mittels einer vorzugsweise handbetätigten Schaltkulisse 55, kann die Hohlwelle 52 längs der Hohlwelle 9 verschoben werden.

In der in Fig. 2 gezeigten Stellung greifen die Zahnräder 5 und 53 ineinander und das Getriebe ist in die Stellung « Vorwärtsgang » geschaltet.

In der Stellung « Rückwärtsgang » wird das Zahnrad 54 mit einem Vorgelegerad 56 in Eingriff gebracht, welches mittels eines Zwischenrades 57 das Rad 5 in Umgekehrter Richtung antreibt.

Bei Rückwärtsgang ist der Zylinder 43 beaufschlagt und der Kraftfluß ist daher wie folgt : Eingangswelle 1 — Zahnrad 3 — Zahnrad 27 — Welle 8 — Kupplungsscheibe 49 — Kupplungsscheibe 32 — Kupplungsscheibe 48 — Welle 9 — Zahnrad 54 — Zahnrad 56 — Zahnrad 57 — Zahnrad 5 — Ausgangswelle 6.

Es ist möglich, beispielsweise durch Hintereinanderschalten eines Getriebes nach Fig. 1 und eines Getriebes nach Fig. 2 einen Antrieb aufzubauen, der die Anwahl von 9 Vorwärts- und 3 Rückwärtsgängen gestattet. Weiters ist es möglich, durch Aufbau der Kupplungsscheibe 32 aus zwei drehfest miteinander verbundenen, hydraulisch auseinanderspreizbaren Teilen, mit dem ansonsten gleichen Getriebe einen vierten Gang schalten zu können, bei dem der Kraftfluß, bezogen auf Fig. 1 wie folgt verläuft : Eingangswelle 1 — Zahnrad 3 — Zahnrad 27 — Welle 8 — Kupplungsscheibe 31 — gespreiztes zentrales Kupplungsscheibenpaar 32 — Kupplungsscheibe 30 — Welle 10 — Zahnrad 28 — Zahnrad 4 — Ausgangswelle 6.

Zur Speisung des Getriebes mit Druckmittel und zum Ansteuern der Schaltvorgänge sind bekannte Vorrichtungen verwendbar, die nicht Gegenstand der Erfindung bilden und deshalb auch nicht dargestellt und beschrieben wurden. Bei einer beispielsweisen Ausführungsform kann der Druck mittels einer unmittelbar vom Antriebsmotor angetriebenen Zahnradpumpe aufgebaut werden.

Die Beaufschlagung des jeweils gewünschten Kolbens oder der jeweils gewünschten Kolben mit Druckmittel kann durch entsprechende elektrische Ansteuerung von elektrischen Schiebern erfolgen. Zweckmäßig wird in die Druckmittelleitung noch eine vorprogrammierte Druckregeleinrichtung eingefügt, die nach jedem Schaltvorgang für einen langsamen Aufbau des Druckes in den Druckmittelleitungen und damit für ein weiches Einkuppeln der diesem Schaltvorgang entsprechenden Zahnradkombination sorgt.

**Ansprüche**

1. Lastschaltgetriebe mit einer Eingangs- und einer Ausgangswelle (1, 6), die je zwei Zahnräder (2, 3 bzw. 4, 5) mit unterschiedlicher Zähnezahl tragen, und einem Vorgelege mit durch Kupplungen (25, 26, 30, 31, 32 ; 47, 48, 49, 50, 32) alternativ in den Kraftübertragungsweg zwischen Eingangs- und Ausgangswelle (1, 6) einschaltbaren Zahnrädern (23, 24, 27, 28), dadurch gekennzeichnet, daß das Vorgelege zwei Paare von koaxialen Wellen (7, 8 und 9, 10) aufweist, die axial aufeinander eingefluchtet sind und an den einander zugekehrten Enden je eine Kupplungsscheibe (25, 31 und 26, 30 ; 47, 49 und 48, 50) mit einwärts vorspringenden wirksamen Kupplungsflächen (25', 31' und 26' 30' ; 47', 49' und 48', 50') und näher ihren anderen Enden je ein Zahnrad (23, 27 und 24, 28) tragen, das in dauerndem Eingriff mit einem zugeordneten Zahnrad (2, 3 bzw. 5, 4) der Eingangs- bzw. Ausgangswelle (1 bzw. 6) steht, daß zwischen den einander zugekehrten Enden der inneren koaxialen Wellen (7, 9) und axial gegen diese frei verschiebbar eine zentrale Kupplungsscheibe (32) gelagert ist, daß zwei homologe Wellen (7, 9 in Fig. 1 ; 8, 10 in Fig. 2) der beiden Wellenpaare (7, 8 und 9, 10) voneinander unabhängig axial aus einer durch Federn (21, 22 in Fig. 1 ; 45, 46 in Fig. 2) gesicherten Ruhelage einwärts verschiebbar, die anderen beiden Wellen hingegen (8, 10 bzw. 7, 9) axial unverschieblich gelagert sind und daß in der Ruhelage aller Wellen die wirksamen Kupplungsflächen (30', 31' in Fig. 1 ; 47', 48' in Fig. 2) der beiden Kupplungsscheiben (30, 31 ; 47, 48) an den axial unverschieblich gelagerten Wellen (8, 10 bzw. 7, 9) näher der zentralen Kupplungsscheibe (32) liegen als die wirksamen Kupplungsflächen (25', 26' bzw. 49', 50') der anderen beiden Kupplungsscheiben (25, 26 bzw. 49, 50).

2. Lastschaltgetriebe nach Anspruch 1, dadurch gekennzeichnet, daß die axial verschieblichen Wellen (7, 9 in Fig. 1 ; 8, 10 in Fig. 2) durch Federn (21, 22 ; 45, 46) in eine der Leerlaufstellung des Getriebes entsprechende Ruhelage vorgespannt und mit Hilfe von Druckmittelzylindern (15, 16 ; 41, 42) in Richtung zur zentralen Kupplungsscheibe (32) verschiebbar sind.

3. Lastschaltgetriebe nach Anspruch 1 oder 2, dadurch gekennzeichnet, daß die zentrale Kupplungsscheibe (32) mit Hilfe von Achszapfen (33, 34) frei verschiebbar in Bohrungen der inneren Wellen (7, 9) der koaxialen Wellenpaare (7, 8 und 9, 10) gelagert ist.

4. Lastschaltgetriebe nach einem der Ansprüche 1 bis 3, dadurch gekennzeichnet, daß die inneren Wellen (7, 9) der koaxialen Wellenpaare (7, 8 und 9, 10) an ihren äußeren Enden, vorzugsweise mittels Kugellagern (7A, 9A) im Gehäuse gelagert sind.

5. Lastschaltgetriebe nach einem der Ansprüche 1 bis 3, dadurch gekennzeichnet, daß die inneren Wellen (7, 9) der koaxialen Wellenpaare (7, 8 und 9, 10) axial unverschieblich gelagert sind und daß eine dieser Wellen (9) über umsteuerbare Zahnräder (53 und 5 bzw. 54, 56, 57 und 5) reversierbar mit dem zugeordneten Zahnrad auf der Ein- oder Ausgangswelle (1, 6) kuppelbar ist.

6. Lastschaltgetriebe nach einem der vorhergehenden Ansprüche, gekennzeichnet durch die Serienschaltung einer nicht reversierbaren und einer reversierbaren Ausführung.

## Claims

1. Load shiftable gearing having an input shaft (1) and an output shaft (6), each of which carries two gearwheels (2, 3 und 4, 5, respectively) having a different number of teeth, and an intermediate gear having gearwheels (23, 24, 27, 28) adapted to be inserted alternatively by means of couplings (25, 26, 30, 31, 32 ; 47, 48, 49, 50, 32) in the power transmission path between the input shaft (1) and the output shaft (6), characterized in that the intermediate gear comprises two pairs of coaxial shafts (7, 8 and 9, 10), which are aligned axially with one another and carry at their adjacent ends a coupling disc (25, 31 and 26, 30 ; 47, 49 and 48, 50) each, the coupling discs having inwardly projecting effective coupling faces (25', 31' and 26' 30' ; 47', 49' and 48', 50'), and nearer to their other ends a gearwheel (23, 27 and 24, 28) each, which is in permanent mesh with an associated gearwheel (2, 3 and 5, 4, respectively) of the input and the output shaft (1 and 6, respectively), in that a central coupling disc (32) is disposed between the adjacent ends of the inner coaxial shafts (7, 9), which is freely slidable axially with respect to said shafts, in that two homologous shafts (7, 9 in Fig. 1 ; 8, 10 in Fig. 2) of the two pairs of shafts (7, 8 and 9, 10) are slidable axially inwards independently of one another out of a rest position into which they are biassed by springs (21, 22 in Fig. 1 ; 45, 46 in Fig. 2), the other two shafts (8, 10 and 7, 9, respectively), however, being axially immovable, and in that in the rest position of all shafts the effective coupling faces (30', 31' in Fig. 1 ; 47', 48' in Fig. 2) of the two coupling discs (30, 31 ; 47, 48) on the axially immovable shafts (8, 10 and 7, 9, respectively) are disposed nearer to the central coupling disc (32) than the effective coupling faces (25', 26' and 49', 50', respectively) of the other two coupling discs (25, 26 and 49, 50, respectively).

2. Load shiftable gearing according to claim 1, characterized in that the axially shiftable shafts (7, 9 in Fig. 1 ; 8, 10 in Fig. 2) are biassed by springs (21, 22 ; 45, 46) into a rest position corresponding to the neutral position of said gearing and are shiftable in the direction towards said central coupling disc (32) by means of fluid pressure cylinders (15, 16 ; 41, 42).

3. Load shiftable gearing according to claim 1 or 2, characterized in that the central coupling disc (22) is freely slidably supported by means of journals (33, 34) in bores in said inner shafts (7, 9) of said coaxial pairs of shafts (7, 8 and 9, 10).

4. Load shiftable gearing according to one of the claims 1 to 3, characterized in that the inner shafts (7, 9) of said coaxial pairs of shafts (7, 8 and 9, 10) are supported at their outer ends in the housing, preferably by means of ball bearings (7A, 9A).

5. Load shiftable gearing according to one of the claims 1 to 3, characterized in that the inner shafts (7, 9) of said pairs of coaxial shafts (7, 8 and 9, 10) are supported axially immovably and in that one of the these shafts (9) is adapted to be coupled via reversing gearwheels (53 and 5 or 54, 56, 57 and 5, respectively) to an associated gearwheel on said input shaft (1) or output shaft (6).

6. Load shiftable gearing according to one of the preceding claims, characterized by the series connection of a non-reversible and a reversible embodiment.

## Revendications

1. Changement de vitesse comportant un arbre d'entrée et un arbre de sortie (1, 6), qui portent chacun deux roues dentées (2, 3 ou 4, 5) dont les nombres de dents sont différents et un train intermédiaire portant des roues dentées (23, 24, 27, 28) pouvant être introduites au moyen d'embrayages (25, 26, 30, 31, 32 ; 47, 48, 49, 50, 32) en alternance dans le trajet de transmission de la force motrice entre l'arbre d'entrée et l'arbre de sortie (1, 6), caractérisé en ce que le train intermédiaire présente deux paires d'arbres coaxiaux (7, 8 et 9, 10) qui sont alignés axialement et qui, à leurs extrémités qui se font face, sont pourvus chacun d'un disque d'embrayage (25, 31 et 26, 30 ; 47, 49 et 48, 50) présentant des surfaces d'embrayage (25', 31' et 26', 30' ; 47', 49' et 48', 50') actives en saillie vers l'intérieur et près de leurs autres extrémités portent chacun une roue dentée (23, 27 et 24, 28) qui est constamment en prise avec une roue dentée associée (2, 3 ou 5, 4) de l'arbre d'entrée ou de l'arbre de sortie (1 ou 6) ; entre les extrémités qui se font face des arbres coaxiaux intérieurs (7, 9) est monté un disque d'embrayage médian (32) mobile librement par rapport à ces arbres dans le sens axial ; deux arbres homologues (7, 9 à la Fig. 1 ; 8, 10 à la Fig. 2) des deux paires d'arbres (7, 8 et 9, 10) sont mobiles axialement indépendamment l'un de l'autre vers l'intérieur à partir d'une position de repos établie par des ressorts (21, 22 à la Fig. 1 ; 45, 46 à la Fig. 2) et les deux autres arbres (8, 10 ou 7, 9) sont par contre immobilisés axialement ; et dans la position de repos de tous les arbres, les surfaces d'embrayage actives (30', 31' à la Fig. 1, 47', 48' à la Fig. 2) des deux disques d'embrayage (30, 31 ; 47, 48) sur les arbres montés immobiles dans le sens axial (8, 10 ou 7, 9) sont plus proches du disque d'embrayage médian (32) que les surfaces d'embrayage actives (25', 26' ou 49', 50') des deux autres disques d'embrayage (25, 26 ou 49, 50).

2. Changement de vitesse suivant la revendication 1, caractérisé en ce que les arbres mobiles axialement (7, 9 à la Fig. 1 ; 8, 10 à la Fig. 2) sont sollicités vers une position de repos correspondant à la position de point mort du changement de vitesse par des ressorts (21, 22 ; 45, 46) et peuvent être déplacés vers le disque d'embrayage médian (32) à l'aide de cylindres (15, 16 ; 41, 42) actionnés par un agent sous pression.

3. Changement de vitesse suivant la revendication 1 ou 2, caractérisé en ce que le disque d'embrayage médian (32) est monté au moyen de tourillons (33, 34) mobile librement dans les alésages des arbres intérieurs (7, 9) des paires d'arbres coaxiaux (7, 8 et 9, 10).

4. Changement de vitesse suivant l'une quelconque des revendications 1 à 3, caractérisé en ce que les arbres intérieurs (7, 9) des paires d'arbres coaxiaux (7, 8 et 9, 10) sont montés à leurs extrémités externes, de préférence au moyen de roulements à billes (7A, 9A) dans le carter.

5. Changement de vitesse suivant l'une quelconque des revendications 1 à 3, caractérisé en ce que les arbres intérieurs (7, 9) des paires d'arbres coaxiaux (7, 8 et 9, 10) sont montés immobiles axialement et l'un de ces arbres (9) peut être couplé par des roues dentées à commande inversible (53 et 5 ou 54, 56, 57 et 5) de manière réversible à la roue dentée associée sur l'arbre d'entrée ou de sortie (1, 6).

6. Changement de vitesse suivant l'une quelconque des revendications précédentes, caractérisé par le montage en série d'une réalisation non réversible et d'une réalisation réversible.

Fig.1

Fig.2